# EUROPÄISCHE PATENTANMELDUNG

(11) **EP 4 761 085 A1**
(43) Veröffentlichungstag der Anmeldung: **17.06.2026**
(21) Anmeldenummer: 25222899.4
(22) Anmeldetag: 12.12.2025
(51) Int. Cl.: H02M 1/42, H02M 5/458, H02M 1/12, H02M 7/04

(54) **FREQUENZUMRICHTER FÜR EINE KREISELPUMPE**

(30) Priorität: 12.12.2024 LU 509330
(71) Anmelder: WILO SE, 44263 Dortmund (DE)
(72) Erfinder: BLÖCKER, Gerrit, 44263 Dortmund (DE)
(74) Vertreter: Cohausz Hannig Borkowski Wißgott

(57) **Zusammenfassung**

Die Erfindung betrifft einen Frequenzumrichter (1) für eine Kreiselpumpe (7) umfassend Eingangsklemmen (11) zum Anschließen des Frequenzumrichters (1) an eine Wechselspannungsquelle (AC), einen mit den Eingangsklemmen (11) verbundenen Gleichrichter (2), einen vom Gleichrichter (2) gespeisten Spannungszwischenkreis (3) mit wenigstens einem Kondensator (4), einen aus dem Spannungszwischenkreis (3) gespeisten Wechselrichter (5) zur Versorgung eines Elektromotors (6) der Kreiselpumpe (7) mit einer Wechselspannung, und eine passive Schaltungsanordnung (8) zur Leistungsfaktorkorrektur. Diese Schaltungsanordnung (8) besteht nur aus einer reellen Impedanz (9) und einer dazu parallel liegenden Kapazität (10), wodurch eine Verringerung der Stromoberwellen bewirkt wird.

## Beschreibung

Die Erfindung betrifft einen Frequenzumrichter für eine Kreiselpumpe umfassend Eingangsklemmen zum Anschließen des Frequenzumrichters an eine Wechselspannungsquelle, einen mit den Eingangsklemmen verbundenen Gleichrichter, einen vom Gleichrichter gespeisten Spannungszwischenkreis mit wenigstens einem Kondensator, einen aus dem Spannungszwischenkreis gespeisten Wechselrichter zur Versorgung eines Elektromotors der Kreiselpumpe mit einer Wechselspannung, und eine passive Schaltungsanordnung zur Leistungsfaktorkorrektur.

Frequenzumrichter sind elektronische Verbraucher, die mittels Halbleiterschaltern eine sinusförmige Spannung nachbilden. Dies erfolgt jedoch nur näherungsweise durch Spannungsstufen, weil die Zwischenkreisspannung nur stufenweise geschaltet werden kann. Die Stromaufnahme des Frequenzumrichters ist deshalb pulsförmig und nicht sinusförmig, was zu Rückwirkungen in Richtung der Wechselspannungsquelle führt. Die Wechselspannungsquelle ist in der Regel ein speisendes Netz, beispielsweise ein öffentliches 230V Spannungsversorgungsnetz. Insbesondere führt die pulsförmige Stromaufnahme dazu, dass das Netz Stromoberwellen transportieren muss, die es belasten, ohne zur tatsächlichen Energieübertragung beizutragen (Blindleistung). Daher existieren Vorschriften bzw. normative Grenzwerte, die von elektronischen Verbrauchern eingehalten werden müssen. Dies wird mit Schaltungsanordnungen zur Leistungsfaktorkorrektur erreicht, die dazu dienen, die Stromoberwellen zu reduzieren. Bezeichnet werden sie als "Power Factor Control", abgekürzt PFC.

Die einfachste Form einer PFC-Schaltungsanordnung besteht beispielsweise aus einer Induktivität oder einem Widerstand und wird daher als "Passive PFC" bezeichnet. Die Vorteile dieser Schaltungsanordnung sind ihre Kompaktheit und kostengünstige Umsetzung. Ein Nachteil besteht jedoch darin, dass sie bei steigendem Stromverbrauch des Verbrauchers weniger effizient werden, weil die ohmschen Verluste an dem Widerstand zunehmen. Für Verbraucher höherer Leistung werden deshalb aktive PFC-Schaltungsanordnungen verwendet.

Aktive PFC-Schaltungsanordnungen beinhalten gesteuerte Bauteile wie MOSFETs und existieren in einer Vielzahl von Topologien. Der Vorteil hierbei liegt darin, dass die Effizienz der Lösung auch bei hohen Leistungsanforderungen des Verbrauchers erhalten bleibt. Ein Nachteil dieser Methode besteht allerdings in ihrer Komplexität sowie den damit verbundenen höheren Kosten.

Aufgabe der Erfindung ist es, einen Frequenzumrichter mit einer einfachen passiven PFC-Schaltungsanordnung bereitzustellen, die eine verbesserte Stromoberwellenreduzierung aufweist.

Diese Aufgabe wird durch eine Schaltungsanordnung mit den Merkmalen des Anspruchs 1 gelöst. Vorteilhafte Weiterbildungen sind in den Unteransprüchen angegeben und werden nachfolgend erläutert.

Erfindungsgemäß wird vorgeschlagen, einen gattungsgemäßen Frequenzumrichter weiterzubilden, indem die Schaltungsanordnung nur aus einer reellen Impedanz und einer dazu parallel liegenden Kapazität besteht. Die Kernidee der Erfindung besteht somit darin, eine passive PFC-Schaltungsanordnung, die aus wenigstens einem Widerstand besteht, durch einen Kondensator zu ergänzen. Die PFC-Schaltungsanordnung ist also weiterhin passiv. Durch die Parallelschaltung der Kapazität zu der Impedanz wird jedoch die Effizienz gegenüber einer PFC-Schaltungsanordnung bestehend aus einer Induktivität oder einem Widerstand erhöht. Ferner durch die Kapazität einige Oberwellen gedämpft, ohne eine Reduzierung der Effizienz. Die vorgeschlagene Lösung ist einfach und führt kaum zu höheren Kosten. Sie ist jedoch effizienter und dadurch auch bei höheren Leistungen einsetzbar.

Obgleich die Impedanz aus mehreren Widerständen gebildet sein kann, ist es im Hinblick auf deren Platzbedarf und Montageaufwand von Vorteil, wenn die reelle Impedanz aus nur einem Widerstand besteht. Somit reduziert sich der Platzbedarf und Montageaufwand auf ein Minimum und die Betriebs- und Ausfallsicherheit wird verbessert.

Aus denselben Gründen ist es von Vorteil, wenn auch die Kapazität aus nur einem Kondensator besteht.

Um die ohmschen Verluste gering zu halten, gleichzeitig aber eine ausreichende Dämpfung der Oberwellen zu erreichen, ist es von Vorteil, wenn die reelle Impedanz einen Widerstandswert zwischen 1 Ω und 3 Ω hat.

Die Kapazität kann einen Kapazitätswert zwischen 10 µF und 100 µF aufweisen. Kondensatoren dieser Art sind kostengünstig und erfordern nur einen geringen Bauraum.

Die erfindungsgemäße PFC-Schaltungsanordnung hat den Vorteil, dass sie vielseitig angeordnet werden kann. Sie kann beispielsweise in einer ersten Ausführungsvariante zwischen dem Gleichrichter und dem Spannungszwischenkreis geschaltet sein. In diesem Fall kann sie in einer oberen Verbindungsleitung liegen, die ein oberes Ausgangsspannungspotenzial des Gleichrichters, umgangssprachlich den Plus-Pol des Gleichrichters, an den Spannungszwischenkreis liefert. Alternativ kann die PFC-Schaltungsanordnung in einer unteren Verbindungsleitung liegen, die ein unteres Ausgangsspannungspotenzial, umgangssprachlich den Minus-Pol des Gleichrichters, oder das Massepotenzial, an den Spannungszwischenkreis liefert. Diese Anordnung bewirkt, dass der Kondensator nach einer gewissen Zeit vollständig geladen ist und schließt, woraufhin der gesamte Strom über den Widerstand fließt. Dies erfolgt bei jeder Halbwelle, wobei bis zum vollständigen Laden des Kondensators ein Teil des Stromes über den Kondensator geflossen ist. Anschließend entlädt sich der Kondensator wieder. Dieses Verhalten wiederholt sich bei der nächsten Halbwelle. Es hat einen geringen Einfluss auf die Stromform und damit auf die Stromoberwellen. Der Netzstrom ist dann nicht nur der Strom durch den Widerstand oder durch die Kapazität, sondern die Summe beider. Er hat damit eine etwas veränderte Form, und damit ändern sich die Amplituden der Oberwellen.

In einer zweiten Ausführungsvariante kann die Schaltungsanordnung zwischen den Eingangsklemmen und dem Gleichrichter angeordnet sein, d.h. die Parallelschaltung aus Impedanz und Kapazität (R und C) in Reihe zur Netzspannung und zum Gleichrichter zu schalten. In diesem Fall kann sie zwischen der oder einer Phase der Wechselspannungsquelle und dem Gleichrichter oder zwischen dem Nullleiter der Wechselspannungsquelle und dem Gleichrichter angeordnet sein, d.h. ohne eine Verbindung zu einem anderen Potential der Wechselspannungsquelle. Ist die Schaltungsanordnung also mit einer Phase der Wechselspannungsquelle und dem Gleichrichter verbunden, dann ist der Nullleiter, oder dann sind im Falle einer mehrphasigen Wechselspannungsquelle die anderen Phasen und der Nullleiter der Wechselspannungsquelle, direkt mit dem Gleichrichter verbunden. Ist die Schaltungsanordnung mit dem Nullleiter der Wechselspannungsquelle und dem Gleichrichter verbunden, dann ist die Phase oder sind im Falle einer mehrphasigen Wechselspannungsquelle die anderen Phasen der Wechselspannungsquelle direkt mit dem Gleichrichter verbunden.

Weitere Merkmale, Vorteile und Eigenschaften der Erfindung werden nachfolgend anhand von Ausführungsbeispielen und der beigefügten Figuren erläutert. In den Figuren bezeichnen Bezugszeichen stets dieselben oder äquivalente Komponenten, Bereiche, Richtungs- oder Ortsangaben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

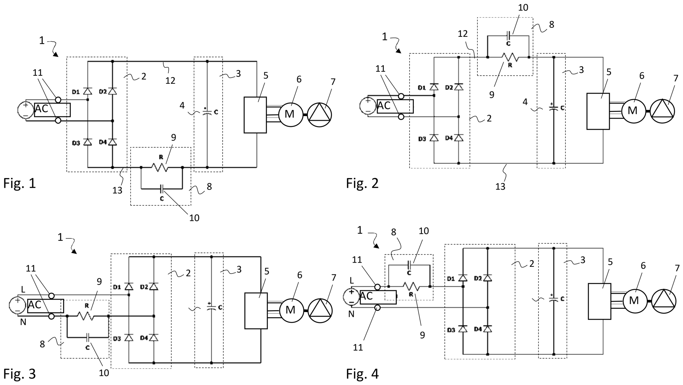

Figuren 1 bis 4 zeigen erfindungsgemäße Frequenzumrichter einer Kreiselpumpe mit vier unterschiedlichen Anordnungen einer PFC-Schaltungsanordnung

Figur 1 zeigt einen Frequenzumrichter 1 einer Kreiselpumpe 7 gemäß einer ersten Ausführungsvariante. Er umfasst Eingangsklemmen 11 zum Anschließen des Frequenzumrichters 1 an eine Wechselspannungsquelle AC, wie z.B. ein 230V oder 110V Spannungsversorgungsnetz. Die Spannungsquelle AC ist hier einphasig, sodass zwei Eingangsklemmen 11 vorhanden sind. Die Spannungsquelle AC kann jedoch in einer anderen Ausführungsvariante auch mehrphasig, insbesondere dreiphasig sein.

Der Frequenzumrichter 1 umfasst des Weiteren einen Gleichrichter 2, der mit den Eingangsklemmen 11 verbundenen ist. Der Gleichrichter 2 ist hier einphasig. Er kann in einer anderen Ausführungsvariante aber auch mehrphasig, insbesondere dreiphasig. Der Gleichrichter 2 ist in an sich bekannter Weise aus zwei parallelen Halbbrücken mit je zwei in Reihe liegenden, gleich gerichteten Dioden D1, D2, D3, D4 aufgebaut, wobei je eine Eingangsklemme mit dem Knotenpunkt zwischen den beiden Dioden je einer Halbbrücke verbunden ist.

Der Gleichrichter 2 speist einen Spannungszwischenkreis 3, der aus wenigstens einem Kondensator 4 gebildet ist. Hierzu liefert der Gleichrichter 2 über eine obere Verbindungsleitung 12 ein oberes Ausgangsspannungspotenzial und über eine untere Verbindungsleitung 13 ein unteres Ausgangsspannungspotenzial an den Zwischenkreis, so dass der Potenzialunterschied zwischen dem oberen und dem unteren Ausgangsspannungspotenzial die sogenannte Zwischenkreisspannung über dem Kondensator 4 bildet. Das obere Ausgangsspannungspotenzial ist der Plus-Pol des Spannungszwischenkreises 3, das untere Ausgangsspannungspotenzial bildet den Minus-Pol bzw. die Masse (GND). Während die Ausgangsspannung des Gleichrichters 2 zwei positive Sinus-Halbwellen wären glättet der Kondensator 4 diesen Spannungsverlauf.

Der Frequenzumrichter 1 umfasst des Weiteren einen aus dem Spannungszwischenkreis 3 gespeisten Wechselrichter 5 zur Versorgung eines Elektromotors 6 der Kreiselpumpe 7 mit einer aus der Zwischenkreisspannung erzeugten Wechselspannung. Der Wechselrichter 5 bildet somit eine Last des Zwischenkreises 3.

Wie Figur 1 außerdem zu erkennen gibt, ist der Frequenzumrichter 1 durch eine passive Schaltungsanordnung 8 zur Leistungsfaktorkorrektur ergänzt, die nur aus einer reellen Impedanz in Gestalt eines einzigen Widerstands 9 und einer dazu parallel liegenden Kapazität 10 in Gestalt eines einzigen Kondensators besteht. Der Widerstand 9 hat einen Wert von 1,72 Ω, während der Kondensator 10 eine Kapazität von 50µm aufweist.

In der Ausführungsvariante gemäß Figur 1 ist die Schaltungsanordnung 8 in der unteren Verbindungsleitung 13 angeordnet, d.h. zwischen dem Gleichrichter 2 und dem Spannungszwischenkreis 3 geschaltet.

Dies ist auch bei der zweiten Ausführungsvariante gemäß Figur 2 der Fall, wobei hier jedoch die Schaltungsanordnung 8 in der oberen Verbindungsleitung 13 angeordnet ist.

Figur 3 und 4 zeigen Ausführungsvarianten, bei denen die Schaltungsanordnung 8 zwischen den Eingangsklemmen 11 und dem Gleichrichter 2 angeordnet ist, wobei gemäß Figur 3 die Schaltungsanordnung 8 zwischen der Phase L der Wechselspannungsquelle AC und dem Gleichrichter 2 und gemäß Figur 4 die Schaltungsanordnung 8 zwischen dem Nullleiter N der Wechselspannungsquelle AC und dem Gleichrichter 2 angeordnet ist.

Jede der genannten Ausführungsvarianten ist in der Lage, die Oberwellen im aufgenommenen Strom des Frequenzumrichters 1 zu verringern.

Um die Pulsförmigkeit des Stromes zu beschreiben, kann der Stromverlauf mit einer Fourieranalyse in Oberwellen zerlegt werden. Jede dieser Oberwellen wird in der Amplitude gemessen und es können Grenzwerte für jede Oberwelle definiert werden. Beispielsweise definiert die Norm DIN EN IEC EN61000-3-2 Class A aus Oktober 2023 folgende Grenzwerte:
- für die 9. Oberwelle einen Grenzwert von 0,4 A,
- für die 11. Oberwelle einen Grenzwert von 0,33 A,
- für die 13. Oberwelle einen Grenzwert von 0,21 A,
- für die 17. Oberwelle einen Grenzwert von 0,1324 A,
- für die 19. Oberwelle einen Grenzwert von 0,1184 A.

Während mit einer konventionellen passiven PFC-Schaltungsanordnung 8 eines Frequenzumrichters 1 einer Kreiselpumpe 7, die lediglich aus dem Widerstand 9 besteht, folgende Abstände zu den Grenzwerten ermittelt worden sind:
- bei der 9. Oberwelle ein Abstand zum Grenzwert von 5,2%,
- bei der 11. Oberwelle ein Abstand zum Grenzwert von 29,2%,
- bei der 13. Oberwelle ein Abstand zum Grenzwert von 40%,
- bei der 17. Oberwelle ein Abstand zum Grenzwert von 30,4%, und
- bei der 19. Oberwelle ein Abstand zum Grenzwert von 22%,
ergeben sich bei Hinzunahme des Kondensators 10 folgende Abstände:
- bei der 9. Oberwelle ein Abstand zum Grenzwert von 10%,
- bei der 11. Oberwelle ein Abstand zum Grenzwert von 35,2%,
- bei der 13. Oberwelle ein Abstand zum Grenzwert von 45,9%,
- bei der 17. Oberwelle ein Abstand zum Grenzwert von 23,4%, und
- bei der 19. Oberwelle ein Abstand zum Grenzwert von 17,8%.

Durch den Einsatz des Kondensators 9 erhöht sich bei der 9. Oberwelle der Abstand zum Grenzwert von 5,2% auf 10%. Ebenfalls ist eine Verbesserung bei der 11. und 13. Oberwelle vorhanden. Bei den Oberwellen der 3., 5. und 7. Ordnung gibt es nur unwesentliche Änderungen. Zwar sinkt der Abstand bei der 17. Oberwelle von 30,4% auf 23,4% und er verringert sich auch bei der 19. Oberwelle. Der Anteil dieser höheren Oberwellen im aufgenommenen Strom ist aber ohnehin deutlich geringer, als der Anteil der dominierenden Oberwellen der 3. bis 13. Ordnung, weshalb sich die Verschlechterung bei der 17. und 19. Oberwelle nicht nachteilig auswirkt. Somit erreicht die erfindungsgemäße PFC-Schaltungsanordnung 8 eine merklich effizientere Stromoberwellenreduzierung. Dies ermöglicht es wiederum, die passive PFC-Schaltungsanordnung 8 gemäß der Erfindung auch bei Frequenzumrichtern höherer Leistung einzusetzen, bei denen aufgrund der höheren Leistung wenigstens ein Grenzwert überschritten wären und deshalb dort eine aktive PFC-Schaltung verwendet werden müsste.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

## Patentansprüche

1. Frequenzumrichter (1) für eine Kreiselpumpe (7) umfassend
- Eingangsklemmen (11) zum Anschließen des Frequenzumrichters (1) an eine Wechselspannungsquelle (AC),
- einen mit den Eingangsklemmen (11) verbundenen Gleichrichter (2),
- einen vom Gleichrichter (2) gespeisten Spannungszwischenkreis (3) mit wenigstens einem Kondensator (4),
- einen aus dem Spannungszwischenkreis (3) gespeisten Wechselrichter (5) zur Versorgung eines Elektromotors (6) der Kreiselpumpe (7) mit einer Wechselspannung, und
- eine passive Schaltungsanordnung (8) zur Leistungsfaktorkorrektur, **dadurch gekennzeichnet, dass** die Schaltungsanordnung (8) nur aus einer reellen Impedanz (9) und einer dazu parallel liegenden Kapazität (10) besteht.

2. Frequenzumrichter (1) nach Anspruch 1, **dadurch gekennzeichnet, dass** die reelle Impedanz (9) aus nur einem Widerstand besteht.

3. Frequenzumrichter (1) nach Anspruch 1 oder 2, **dadurch gekennzeichnet, dass** die Kapazität (10) aus nur einem Kondensator besteht.

4. Frequenzumrichter (1) nach einem der vorherigen Ansprüche, **dadurch gekennzeichnet, dass** die reelle Impedanz (9) einen Widerstandswert zwischen 1 Ω und 3 Ω hat.

5. Frequenzumrichter (1) nach einem der vorherigen Ansprüche, **dadurch gekennzeichnet, dass** die Kapazität (10) einen Kapazitätswert zwischen 10 µF und 100 µF hat.

6. Frequenzumrichter (1) nach einem der vorherigen Ansprüche, **dadurch gekennzeichnet, dass** die Schaltungsanordnung (8) zwischen dem Gleichrichter (2) und dem Spannungszwischenkreis (3) geschaltet ist.

7. Frequenzumrichter (1) nach Anspruch 6, **dadurch gekennzeichnet, dass** die Schaltungsanordnung (8) in einer oberen Verbindungsleitung (12) liegt, die ein oberes Ausgangsspannungspotenzial des Gleichrichters (2) an den Spannungszwischenkreis (3) liefert.

8. Frequenzumrichter (1) nach Anspruch 6, **dadurch gekennzeichnet, dass** die Schaltungsanordnung (8) in einer unteren Verbindungsleitung (13) liegt, die ein unteres Ausgangsspannungspotenzial des Gleichrichters (2), insbesondere Massepotenzial an den Spannungszwischenkreis liefert.

9. Frequenzumrichter (1) nach einem der Ansprüche 1 bis 5, **dadurch gekennzeichnet, dass** die Schaltungsanordnung (8) zwischen den Eingangsklemmen (11) und dem Gleichrichter (2) angeordnet ist.

10. Frequenzumrichter nach Anspruch 9, **dadurch gekennzeichnet, dass** die Schaltungsanordnung (8) zwischen der oder einer Phase (L) der Wechselspannungsquelle (AC) und dem Gleichrichter (2) oder zwischen dem Nullleiter (N) der Wechselspannungsquelle (AC) und dem Gleichrichter (2) angeordnet ist.
